# EUROPEAN PATENT SPECIFICATION

(11) **EP 4 649 388 B1**
(45) Date of publication and mention of the grant of the patent: **02.09.2026**
(21) Application number: 23841066.6
(22) Date of filing: 21.12.2023
(51) Int. Cl.: G06F 3/04842, G06F 3/0482, G06F 3/04845, G06Q 50/02, G06Q 10/063

(54) **METHOD AND SYSTEM TO PROVIDE A REGION EXPLORER FUNCTION FOR SELECTING REGIONS OF INTEREST OF AGRICULTURAL DATA LAYERS AND TO PROVIDE DATA METRICS FOR THE REGIONS OF INTEREST**
VERFAHREN UND SYSTEM ZUR BEREITSTELLUNG EINER REGIONSEXPLORERFUNKTION ZUR AUSWAHL VON REGIONEN VON INTERESSE IN LANDWIRTSCHAFTLICHEN DATENSCHICHTEN UND ZUR BEREITSTELLUNG VON DATENMETRIKEN FÜR INTERESSENSBEREICHE
PROCÉDÉ ET SYSTÈME POUR FOURNIR UNE FONCTION D'EXPLORATION DE ZONE POUR SÉLECTIONNER DES ZONES D'INTÉRÊT DE COUCHES DE DONNÉES AGRICOLES ET POUR FOURNIR DES MÉTRIQUES DE DONNÉES POUR LES ZONES D'INTÉRÊT

(30) Priority: 12.01.2023 US 202363479592 P
(43) Date of publication of application: 19.11.2025
(73) Proprietor: Precision Planting LLC, Tremont, IL 61568 (US)
(72) Inventor: NELSON, Matthew, Tremont, Illinois 61568 (US); WILCOXSON, David Aaron, Tremont, Illinois 61568 (US)
(74) Representative: AGCO Intellectual Property Department
(86) International application number: PCT/IB2023/063092
(87) International publication number: WO 2024/150056

(56) References cited:
- US-A1- 2018 136 831
- US-A1- 2019 347 745
- US-A1- 2020 082 577
- US-A1- 2021 092 913
- US-A1- 2021 144 911
- US-A1- 2022 026 230

## Description

### RELATED APPLICATIONS

This application claims priority to U.S. Provisional Application No. 63/479592, filed on 12 January 2023.

### TECHNICAL FIELD

Embodiments of the present disclosure relate to a method and system to provide a region explorer function for selecting regions of interest of agricultural data layers of field views and to provide data metrics for the regions of interest.

### BACKGROUND

Planters are used for planting seeds of crops (e.g., corn, soybeans) in a field. Some planters include a display monitor within a cab for displaying a coverage map that shows regions of the field that have been planted. The coverage map of the planter is generated based on planting data collected by the planter.

A combine harvester or combine is a machine that harvests crops. A coverage map of a combine displays regions of the field that have been harvested by that combine. A coverage map allows the operator of the combine to know that a region of the field has already been harvested by the same combine. The coverage map can be difficult to understand for planting and harvesting parameters.

US 2019/347745 A1 refers to a computer-implemented method of managing data related to an agricultural process for an efficient exploration, review, analysis, and manipulation of farming and financial data associated with different layers of an agricultural process. The method involves causing the display of a first map of one or more agricultural fields, where the first map indicates a first type of farming data associated with the fields, and receiving cost data corresponding to a second type of farming data associated with the fields, receiving revenue data associated with the fields, and performing a return-on-investment (RoI) analysis for the fields.

US 2020 082577 A1 refers to a method and system for generating soil maps and application prescriptions. The prescription system includes a user computer, a planter monitor, a data transfer device, a global positioning receiver, a user interface, a map service, a soil data server, a system server, and a system database. The system allows a user to log into the user interface, navigate to a field of interest, draw a boundary within the field, and generate a soil map illustrating the soil types within the boundary. The user can then enter a desired crop input application parameter, such as seed population, for each soil type, resulting in a prescription for the entire field.

US 2018/136831 A1 refers to a computing system comprising a computer processor and a computer readable storage medium storing a data structure including a plurality of shape files. The system receives a search term, identifies a first shape file in the data structure that includes the search term, retrieves one or more shape files that share the same file name as the first shape file, generates a shape preview based on the first shape file and the retrieved shape files, and generates user interface data for rendering the interactive user interface including the shape preview.

### BRIEF SUMMARY

In an aspect of the disclosure there is provided a computer implemented method for selecting a region of interest in a field view of a graphical user interface (GUI) of a software application comprising receiving a user input to select a region explorer function from a mapping option of the GUI, generating a pop up window or a side by side window for a region explorer view based on the user input, receiving, with the field view, a multipoint user input for selecting the region of interest in the field view and automatically generating and displaying in the pop up window or the side by side window of the region explorer view data metrics for a first parameter in the region of interest based on the multipoint user input, wherein the data metrics comprise one or more of a minimum data value in the selected region, a maximum data value in the selected region, a histogram for the data values in the selected region, and a number of acres selected in the region of interest.

In one example of the computer implemented method, further comprising receiving a user input to select the first parameter from a parameter region of the GUI.

In one example of the computer implemented method, wherein the histogram for the data values for the first parameter are grouped into data ranges in the selected region.

In one example of the computer implemented method, wherein the region of interest of the field view is a polygon formed with the multipoint user input to select vertices of the polygon.

In one example of the computer implemented method, further comprising receiving a user input for selecting a different second parameter and automatically generating data values for the second parameter in the field view of the user interface and generating data metrics for the second parameter in the region of interest based on the user input for the second parameter.

In one example of the computer implemented method, further comprising displaying the field view with the data values for the second parameter and the selected explorer region; and displaying data metrics for the second parameter in the region of interest in a pop up window or a side by side window.

In one example of the computer implemented method, wherein the first parameter comprises a plant summary including coverage, elevation, or vehicle speed, a closing force parameter or a down force parameter including an applied force, an average force, a force margin, a minimum force, or a force state.

In one example of the computer implemented method, wherein the first parameter comprises an insecticide or weed & feed parameter, a nitrogen, a starter, a fungicide parameter, or a seeding parameter including a crop hybrid, a population, a population state, a seeding tank, a singulation, a SRI, or a meter vacuum.

In one example of the computer implemented method, further comprising receiving selection of a comparison between selected regions of field views for two parameters, and generating, in response to the selection, comparison data and a user interface with an X versus Y display view for displaying X versus Y data values for the selected two parameters.

In another aspect of the disclosure there is provided a system comprising a display device for displaying a graphical user interface (GUI) having a system parameter region, a mapping option, a field view with data values for a first parameter for an agricultural field, and a region explorer view with data metrics for the first parameter and at least one processor coupled to the display device. The at least one processor is configured to execution instructions to receive a user input to select a region explorer function from a mapping option of the user interface, generate a pop up window or a side by side window for the region explorer view based on the user input, receive a multipoint user input for selecting a region of interest of the field view, and automatically generating data metrics for the first parameter in the region of interest based on the multipoint user input.

In one example of the system, wherein the display device is configured to display the region explorer view with the data metrics for the first parameter based on the multipoint user input.

In one example of the system, wherein the data metrics comprise one or more of a minimum data value in the selected region, a maximum data value in the selected region, and a histogram for the data values in the selected region.

In one example of the system, wherein the data metrics comprise a histogram for the data values in the selected region.

In one example of the system, wherein the region of interest of the field view is a polygon formed with the multipoint user input to select the vertices of the polygon.

In one example of the system, wherein the at least one processor is configured to execute instructions to receive a user input for selecting a different second parameter and automatically generating data values for the second parameter in the field view of the user interface and generating data metrics for the second parameter based on the user input for the second parameter.

In one example of the system, wherein the at least one processor is configured to execute instructions to display the field view with the data values for the second parameter and the selected explorer region and display data metrics for the second parameter in the region of interest in a pop up window or a side by side window.

In one example of the system, wherein the first parameter comprises a plant summary including coverage, elevation, or vehicle speed, a closing force parameter or a down force parameter including an applied force, an average force, a force margin, a minimum force, or a force state.

In one example of the system, wherein the first parameter comprises an insecticide or weed & feed parameter, a nitrogen, a starter, a fungicide parameter, or a seeding parameter including a crop hybrid, a population, a population state, a seeding tank, a singulation, a SRI, or a meter vacuum.

In one example of the system, wherein the data metrics comprise a minimum value, a maximum value, and an average value for seed population in the region of interest.

In one example of the system, wherein the at least one processor is configured to execute instructions to receive a user input for selecting the first parameter from a parameter region of the GUI.

In one example of the system, wherein the display device is configured to receive a user input for selection of a comparison between selected regions of field views for two parameters, to generate, in response to the selection, comparison data, and to generate a user interface with an X versus Y display view for displaying X versus Y data values for the selected two parameters in response to receiving the comparison data.

### BRIEF DESCRIPTION OF THE DRAWINGS

The present disclosure is illustrated by way of example, and not by way of limitation, in the figures of the accompanying drawings and in which:
FIG. 1 shows an example of a system for performing agricultural operations (e.g., planting operations) of agricultural fields including operations of an implement having row units in accordance with one embodiment.
FIG. 2 illustrates a flow diagram of one embodiment for a method 200 of selecting a parameter and a region of interest in a field view and automatically generating data metrics for the selected parameter in the region of interest of an agricultural field.
FIGs. 3-5 illustrate user interfaces with a field view and a region explorer view in accordance with one embodiment.
FIG. 6 shows an example of a block diagram of a self-propelled implement 140 (e.g., sprayer, spreader, irrigation implement, etc.) in accordance with one embodiment.
FIG. 7 shows an example of a block diagram of a system 100 that includes a machine 102 (e.g., tractor, combine harvester, etc.) and an implement 1240 (e.g., planter, cultivator, plough, sprayer, spreader, irrigation implement, etc.) in accordance with one embodiment.
FIG. 8 is a side elevation view of a row unit 10 of an agricultural planter with a seed firmer 1300 mounted to the row unit 10.
FIG. 9 illustrates a user interface with a dual field view and selected region for two parameters in accordance with one embodiment.
FIG. 10 illustrates a user interface with an X versus Y (e.g., yield v. organic matter, yield v. downforce, yield v. hybrid, yield v. furrow force, yield v. any measured value, population v. singulation, crop hybrid v. organic matter, singulation v. planting speed, SRI v. hybrid, etc.) display view upon selection of a comparison option for two parameters in accordance with one embodiment.

### DETAILED DESCRIPTION

Described herein are systems and a method for providing a region explorer function for selecting a region of interest in a field view and automatically generating data metrics for a selected parameter in the region of interest of an agricultural field. While illustrated with visualized data obtained from agricultural fields, the described operations can be used with any visualized data. In one embodiment, a data processing system (e.g., planter monitor of a cab, display system, tractor, machine, apparatus, computing device, user device, drone, self-guided device, self-propelled device, etc.) can generate and cause a display device to display a localized view map layer that is geographically associated with a selected region of a field map. In one embodiment, a computer implemented method includes displaying a graphical user interface (GUI) on the display device with the GUI displaying a field view for agricultural data layers. The method includes receiving a user input to select a region explorer function from a mapping option of the user interface, generating a pop up window or a side by side window for a region explorer view based on the user input, receiving, with the field view, a multipoint user input for selecting the region of interest of the field view, and automatically generating and displaying on the display device data metrics for a first parameter in the pop up window or the side by side window of the region explorer view based on the multipoint user input.

The user can select any region of interest in the field view for a parameter and instantaneously be able to view data metrics (e.g., minimum data value in the selected region, maximum data value in the selected region, average data value in the selected region, histogram for the data values in the selected region). The histogram allows the user (e.g., farmer, operator, grower) to understand a distribution of a product applied in the area specified by the user input, as well as the highest/lowest value to understand the performance of the system (e.g., fluid application system, planting system) that applied the product (e.g., fertilizer, seed, etc.). Visualizing these highest and lowest values along with a histogram is helpful to the user because in many cases, a data layer shown as a field view such as a map image has a high level of variation, and can be difficult to understand. In one example, it can be difficult to understand how much of the area is in each bucket of the distribution without data metrics and a histogram.

In the following description, numerous details are set forth. It will be apparent, however, to one skilled in the art, that embodiments of the present disclosure may be practiced without these specific details. In some instances, well-known structures and devices are shown in block diagram form, rather than in detail, in order to avoid obscuring the present disclosure.

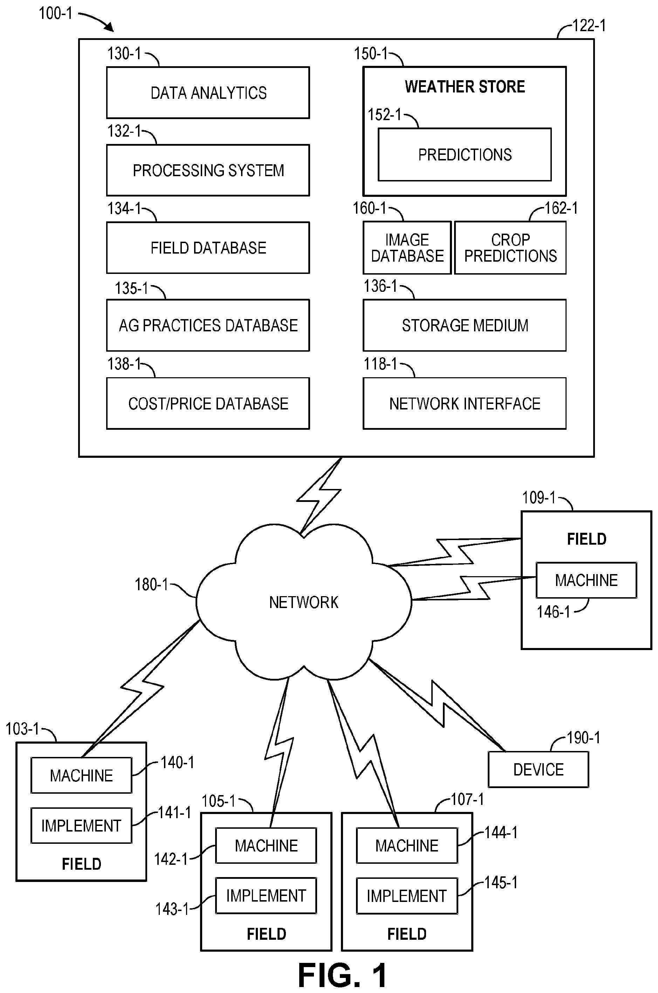

FIG. 1 shows an example of a system for performing agricultural operations (e.g., planting operations, tillage operations, irrigation operations, fluid operations, etc.) of agricultural fields including operations of an implement having row units in accordance with one embodiment. For example, and in one embodiment, the system 100-1 may be implemented as a cloud based system with servers, data processing devices, computers, etc. Aspects, features, and functionality of the system 100-1 can be implemented in servers, planters, planter monitors, combines, implements, laptops, tablets, computer terminals, client devices, user devices (e.g., device 190-1), handheld computers, personal digital assistants, cellular telephones, cameras, smart phones, mobile phones, computing devices, or a combination of any of these or other data processing devices.

In other embodiments, the system includes a network computer or an embedded processing device within another device (e.g., display device) or within a machine (e.g., planter, combine), or other types of data processing systems having fewer components or perhaps more components than that shown in Figure 1. The system 100-1 (e.g., cloud based system) and agricultural operations can control and monitor planting operations for planting within a planting furrow or trench using an implement or machine. The system 100-1 includes machines 140-1, 142-1, 144-1, 146-1 and implements 141-1, 143-1, 145-1 coupled to a respective machine. The implements (or machines) can include row units for planting operations of rows of crops within associated fields (e.g., fields 103-1, 105-1, 107-1, 109-1). The system 100-1 includes an agricultural analysis system 122-1 that includes a weather store 150-1 with current and historical weather data, weather predictions module 152-1 with weather predictions for different regions, and at least one processing system 132-1 for executing instructions for controlling and monitoring different operations (e.g., planting, fertilizing). The storage medium 136-1 may store instructions, software, software programs, etc. for execution by the processing system and for performing operations of the agricultural analysis system 122-1. In one example, storage medium 136-1 may contain a planting prescription (e.g., planting prescription that relates georeferenced positions in the field to planting parameters (e.g., soil type, downforce, speed, seed orientation, etc.). The implement 141-1 (or any of the implements) may include an implement 200-1 whose sensors and/or controllers may be specifically the elements that are in communication with the network 180-1 for sending control signals or receiving as-applied data.

An image database 160-1 stores captured images of plants or crops at different growth stages and seed at different positions and orientation in a seed passageway during planting. A data analytics module 130-1 may perform analytics on agricultural data (e.g., images, weather, field, yield, etc.) to generate crop predictions 162-1 relating to agricultural operations.

A field information database 134-1 stores agricultural data (e.g., crop growth stage, soil types, soil characteristics, moisture holding capacity, etc.) for the fields that are being monitored by the system 100-1. An agricultural practices information database 135-1 stores farm practices information (e.g., as-applied planting information (e.g., seed orientation), as-applied spraying information, as-applied fertilization information, planting population, applied nutrients (e.g., nitrogen), yield levels, proprietary indices (e.g., ratio of seed population to a soil parameter), etc.) for the fields that are being monitored by the system 100-1. An implement can obtain seed orientation data and provide this data to the system 100-1. A cost/price database 138-1 stores input cost information (e.g., cost of seed, cost of nutrients (e.g., nitrogen)) and commodity price information (e.g., revenue from crop).

The system 100-1 shown in FIG. 1 may include a network interface 118-1 for communicating with other systems or devices such as drone devices, user devices, and machines (e.g., planters, combines) via a network 180-1 (e.g., Internet, wide area network, WiMax, satellite, cellular, IP network, etc.). The network interface includes one or more types of transceivers for communicating via the network 180-1.

The processing system 132-1 may include one or more microprocessors, processors, a system on a chip (integrated circuit), or one or more microcontrollers. The processing system includes processing logic for executing software instructions of one or more programs. The system 100-1 includes the storage medium 136-1 for storing data and programs for execution by the processing system. The storage medium 136-1 can store, for example, software components such as a software application for controlling and monitoring field operations or any other software application to perform operations described herein. The storage medium 136-1 can be any known form of a machine readable non-transitory storage medium, such as semiconductor memory (e.g., flash; SRAM; DRAM; etc.) or non-volatile memory, such as hard disks or solid-state drive.

While the storage medium (e.g., machine-accessible non-transitory medium) is shown in an exemplary embodiment to be a single medium, the term "machine-accessible non-transitory medium" should be taken to include a single medium or multiple media (e.g., a centralized or distributed database, and/or associated caches and servers) that store the one or more sets of instructions. The term "machine- accessible non-transitory medium" shall also be taken to include any medium that is capable of storing, encoding or carrying a set of instructions for execution by the machine and that cause the machine to perform any one or more of the methodologies of the present disclosure. The term "machine-accessible non-transitory medium" shall accordingly be taken to include, but not be limited to, solid-state memories, optical and magnetic media, and carrier wave signals.

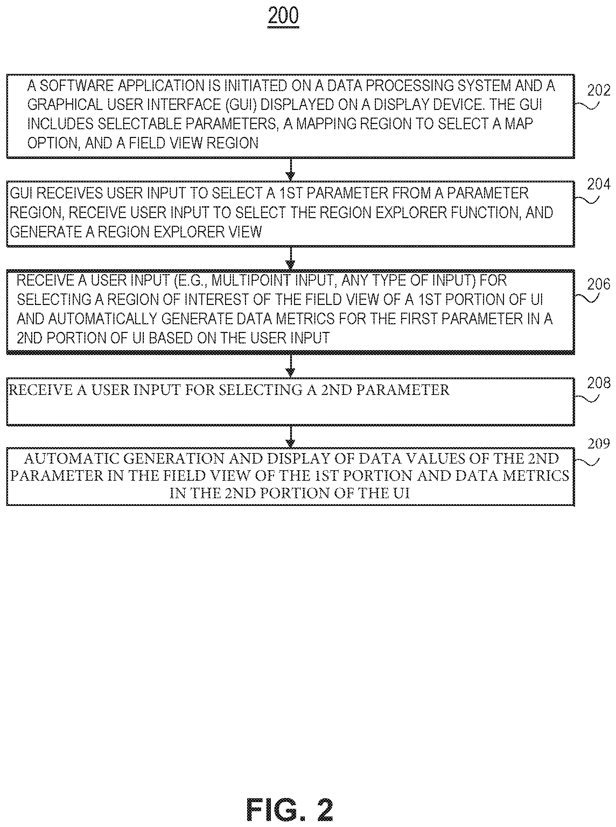

FIG. 2 illustrates a flow diagram of one embodiment for a method 200 of selecting a parameter and a region of interest in a field view and automatically generating data metrics for the selected parameter in the region of interest of an agricultural field. The method 200 is performed by processing logic that may comprise hardware (circuitry, dedicated logic, graphics processing unit (GPU), etc.), software (such as is run on a general purpose computer system or a dedicated machine or a device), or a combination of both. In one embodiment, the method 200 is performed by processing logic of at least one data processing system (e.g., system 100-1, machine, apparatus, monitor, display device, computing device, user device, self-guided device, self-propelled device, etc.). The data processing system executes instructions of a software application or program with processing logic. The software application or program can be initiated by the data processing system. In one example, a monitor or display device receives user input and provides a customized display for operations of the method 200.

At operation 202, a software application (e.g., cloud based application, mobile application) is initiated on a data processing system (e.g., system 100-1, processing system 132-1, 1200, 162, machine, apparatus, user device (e.g., device 190-1), self-guided device, self-propelled device, etc.) and displayed on a monitor or display device as a graphical user interface (GUI). The data processing system may be integrated with or coupled to a machine that performs an application pass (e.g., planting, tillage, fertilization, irrigation, etc.). Alternatively, the data processing system may be integrated with an apparatus (e.g., drone, image capture device) associated with the machine that captures images during the application pass. The user interface can include different selectable system parameters (e.g., plant summary (e.g., coverage, elevation, vehicle speed), closing force parameter (e.g., applied force, average force, force margin, minimum force, force state), down force parameter (e.g., applied force, average force, force margin, minimum force, force state), insecticide or weed & feed parameter (e.g., magnitude, deviation, uniformity, blockage), nitrogen, starter, or fungicide parameter (e.g., flow, flow state), seeding (e.g., crop hybrid, population, population state, seeding tank, singulation, SRI, meter vacuum), organic matter, temperature, vehicle or implement speed, or any measured property) of a field view region, a mapping region to select a map option (e.g., map with details, full width map, region explorer function, split map comparison, and diagnostic timeline), and the field view region.

At operation 204, the GUI receives user input to select a first parameter from a system parameter region, receives user input to select the region explorer function, and generates a pop up window or a side by side window of a region explorer view that is displayed with the monitor or display device. The user interface is generated based on the user input and a first portion may include a field view of data values for the selected first parameter and a range region for a range of data values of the selected parameter. The second portion of the user interface includes the region explorer view with instructions to use a cursor or touch input to select a region of the field view of data values in the first portion. The range region can include a plurality of color steps with each color representing a different range of data values for the selected parameter (e.g., -50 to 0 lbs of down force for a first color of the range region, 0 to 50 lbs of down force for a second color, 50 to 100 lbs of down force for a third color, etc.).

At operation 206, the software application receives a user input (e.g., multipoint mouse input, multipoint touch user input, any type of user input) for selecting a region (e.g., polygon) of interest of the field view of data values in the first portion to automatically cause the generation of data metrics and display of the data metrics (e.g., minimum data value in the selected region, maximum data value in the selected region, average data value in the selected region, histogram for the data values in the selected region) for the first parameter in the second portion of the user interface.

At operation 208, the software application receives a user input (e.g., mouse input, touch user input, any type of user input) for selecting a different second parameter and this user input causes at operation 209 automatic generation and display of data values for the second parameter in the field view of the first portion and the second portion of a user interface. The first portion can include a field view of data values for the second parameter, the previously selected region (e.g., polygon), and the second portion can include data metrics (e.g., minimum data value in the selected region, maximum data value in the selected region, average data value in the selected region, histogram for the data values in the selected region) for the second parameter.

In some embodiments, the operations of the method(s) disclosed herein can be altered, modified, combined, or deleted. The methods in embodiments of the present disclosure may be performed with a device, an apparatus, or data processing system as described herein. The device, apparatus, or data processing system may be a conventional, general-purpose computer system or special purpose computers, which are designed or programmed to perform only one function, may also be used.

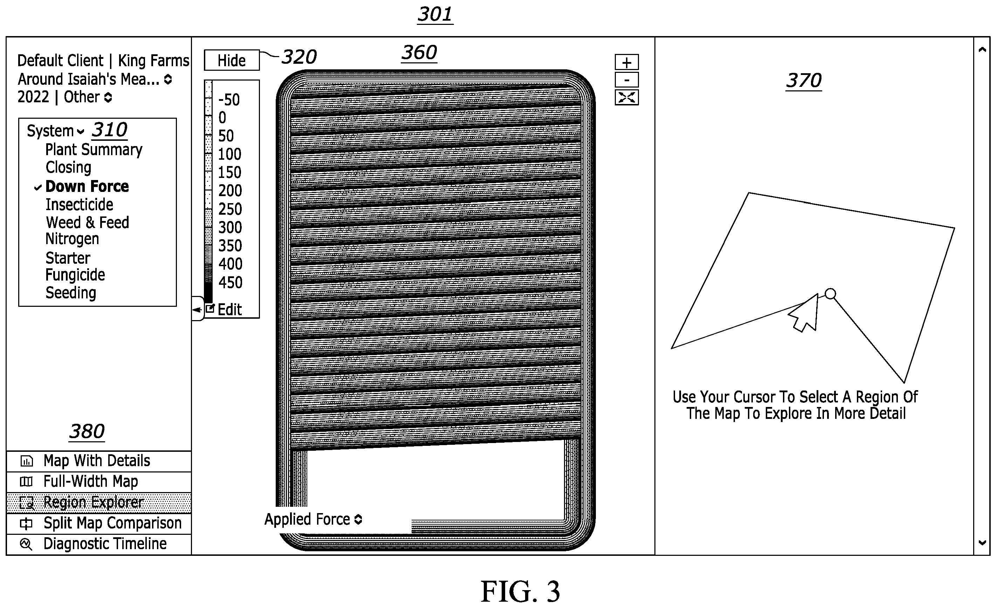

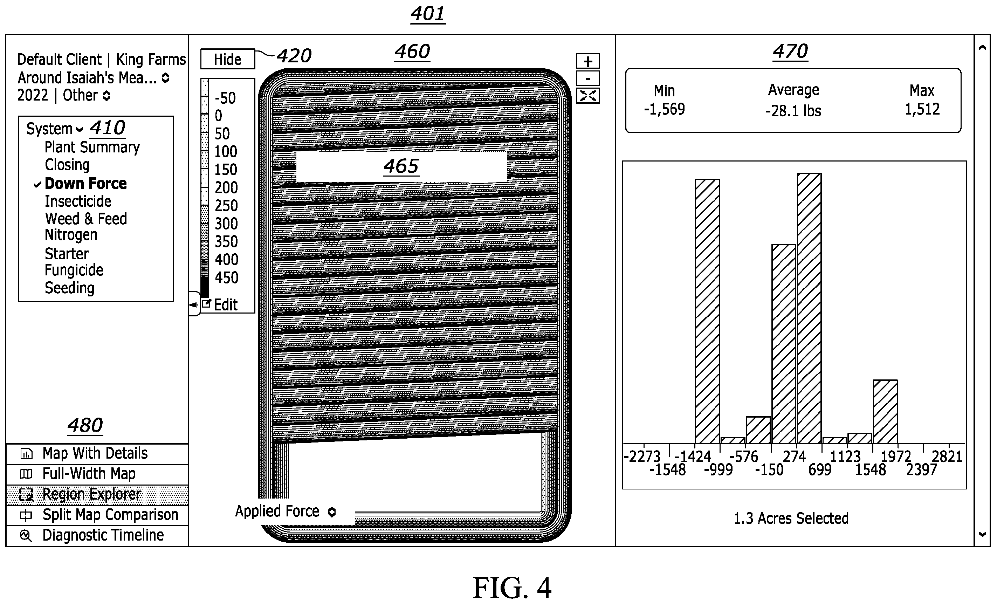

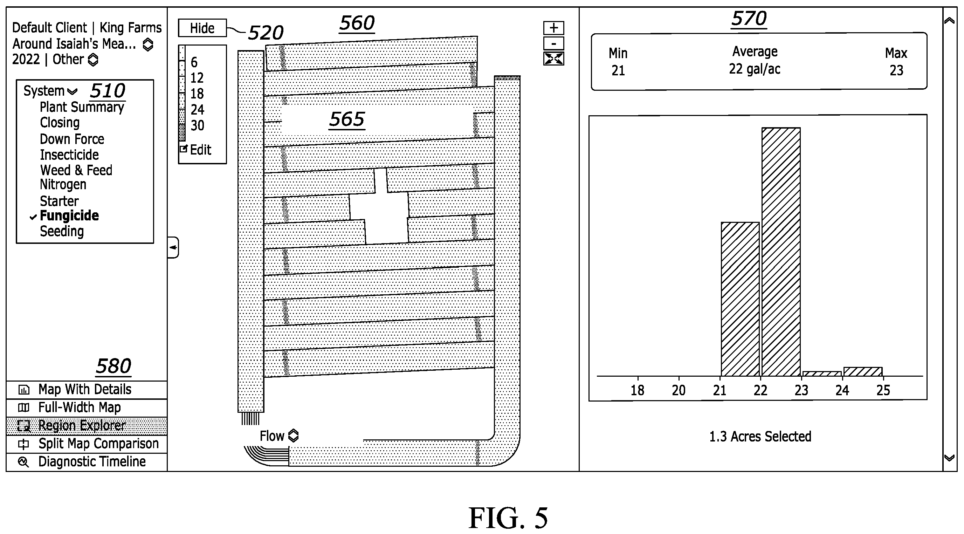

FIGs. 3-5 illustrate a graphical user interface (GUI) with a field view and a region explorer view in accordance with one embodiment. An initiated software application (e.g., field application) of a data processing system generates the user interface 301 that is displayed by the monitor, display device, or mobile device.

The GUI can provide different display regions that are selectable by a user. In one example, the display regions include a system parameter region (e.g., region 310, region 410, region 510) having a plurality of parameters (e.g., plant summary (e.g., coverage, elevation, vehicle speed), closing force parameter (e.g., applied force, average force, force margin, minimum force, force state), down force parameter (e.g., applied force, average force, force margin, minimum force, force state), insecticide or weed & feed parameter (e.g., magnitude, deviation, uniformity, blockage), nitrogen, starter, or fungicide parameter (e.g., flow, flow state), seeding (e.g., crop hybrid, population, population state, seeding tank, singulation, SRI, meter vacuum), organic matter, temperature, vehicle or implement speed, or any measured property), a range region (e.g., range region 320, range region 420, range region 520) having adjustable color steps, a field view region (e.g., field view 360, field view 460, field view 560) for the selected parameter, a region explorer (e.g., region explorer 370, region explorer 470, region explorer 570), and a mapping option (e.g., mapping option 380, mapping option 480, mapping option 580) having different mapping options (e.g., map with full details, full width map, region explorer, split map comparison, and diagnostic timeline).

As discussed for method 200, the GUI can receive user input to select a first parameter (down force in UI 301 of FIG. 3) from a system parameter region 310, receive user input to select the region explorer in mapping option 380, and generate a pop up window or a side by side window of the user interface 301 that is displayed with the monitor or display device. The user interface 301 is generated based on the user input and may include a first portion (e.g., field view 360) of data values for the selected first parameter and a range region 320 for a range of data values of the selected parameter. The second portion (e.g., region explorer 370) of the user interface includes instructions to use a cursor or touch input to select a region of the field view 360.

Next, the GUI receives a user input (e.g., multipoint mouse input, multipoint touch user input, any type of user input, 4 point input to draw the polygon) for selecting and defining a region 465 (e.g., polygon 465) of the field view of data values and this automatically causes the generation of data metrics and display of the UI 401 to show data metrics (e.g., minimum data value in the selected region, maximum data value in the selected region, average data value in the selected region, histogram for the data values in the selected region) for the first parameter in the region explorer 470 of the user interface 401.

The GUI can then receive a user input (e.g., mouse input, touch user input, any type of user input) for selecting a different second parameter (e.g., fungicide) from system parameter region and this user input causes generation and display of data values for the second parameter in the field view 560. The field view 560 of data values for the second parameter uses the previously selected region 465 (e.g., polygon 465) to show a selected region 565 with data values for the second parameter. The regions 465 and 565 represent the same region at the same location in the field but with different parameters. The field explorer 570 can include data metrics (e.g., minimum data value in the selected region, maximum data value in the selected region, average data value in the selected region, histogram for the data values in the selected region) for the second parameter.

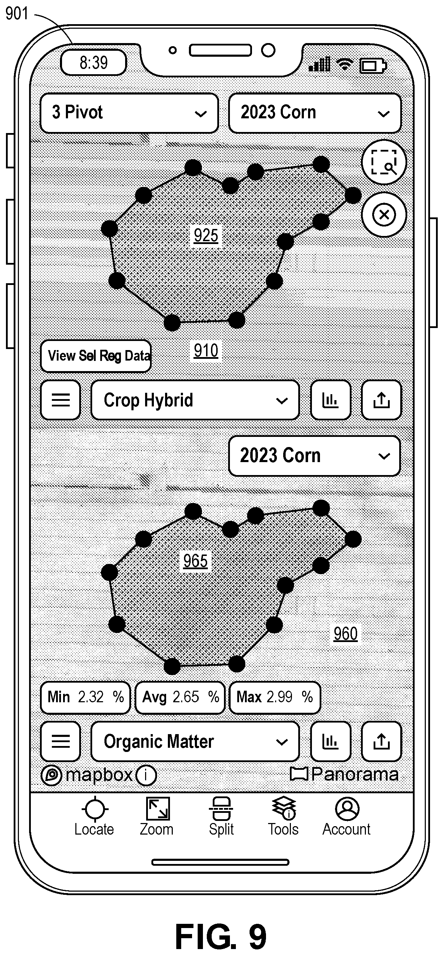

In another embodiment, the GUI can receive a user input (e.g., mouse input, touch user input, any type of user input) for selecting multiple parameters (e.g., yield, plant summary (e.g., coverage, elevation, vehicle speed), closing force parameter (e.g., applied force, average force, force margin, minimum force, force state), down force parameter (e.g., applied force, average force, force margin, minimum force, force state), insecticide or weed & feed parameter (e.g., magnitude, deviation, uniformity, blockage), nitrogen, starter, or fungicide parameter (e.g., flow, flow state), seeding (e.g., crop hybrid, population, population state, seeding tank, singulation, SRI, meter vacuum), organic matter, temperature, vehicle or implement speed, or any measured property) from a parameter region to generate a user interface 901 with a dual field view as illustrated in FIG. 9 when a crop hybrid and organic matter are the selected parameters. A field view 910 displays a crop hybrid across a field and has a selected region 925 (e.g., polygon 925) for a region explorer function based on a user input. A field view 960 displays organic matter across a field and has a selected region 965 (e.g., polygon 965) based on a user input. In one example, data metrics (e.g., minimum percent value in a selected region, average percent value in a selected region, maximum percent value in a selected region) can be overlaid on a field view or displayed in a separate view. The region explorer provides a statistical summary in a selected region including minimum percent value in a selected region, average percent value in a selected region, maximum percent value in a selected region, and histograms. The initiated software application (e.g., field application) of a data processing system provides support for continuous field maps and discrete field maps.

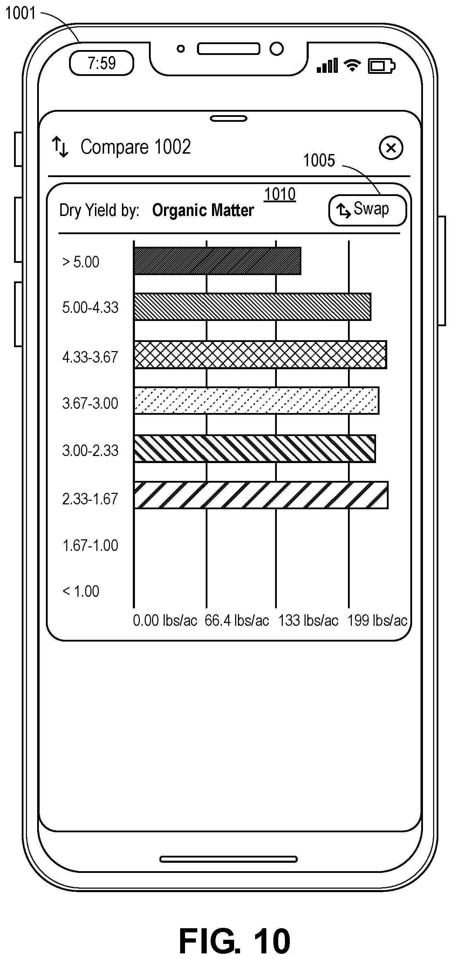

Upon selection of a comparison option 1002 for two parameters, a new user interface 1001 as illustrated in FIG. 10 with an X versus Y (e.g., yield v. organic matter, yield v. downforce, yield v. hybrid, yield v. closing system force during planting, yield v. any measured value, population v. singulation, crop hybrid v. organic matter, singulation v. planting speed, SRI v. hybrid, yield v. row cleaner pressure, etc.) display view 1010 is generated and displayed on a display device or mobile device for X v. Y data values for the selected parameters. The display view 1010 shows dry yield (X) on an x-axis versus organic matter (Y) on a y-axis of data values for the selected parameters and previously selected regions (e.g., polygons). In one example, the previously selected regions represent the same region at the same location in the field but with different parameters. The parameters in the display view 1010 can be swapped with swap option 1005 with dry yield (Y) on a y-axis and organic matter (X) on an x-axis (not shown).

The initiated software application (e.g., field application) of a data processing system provides support for continuous v. continuous field maps and continuous v. discrete field maps.

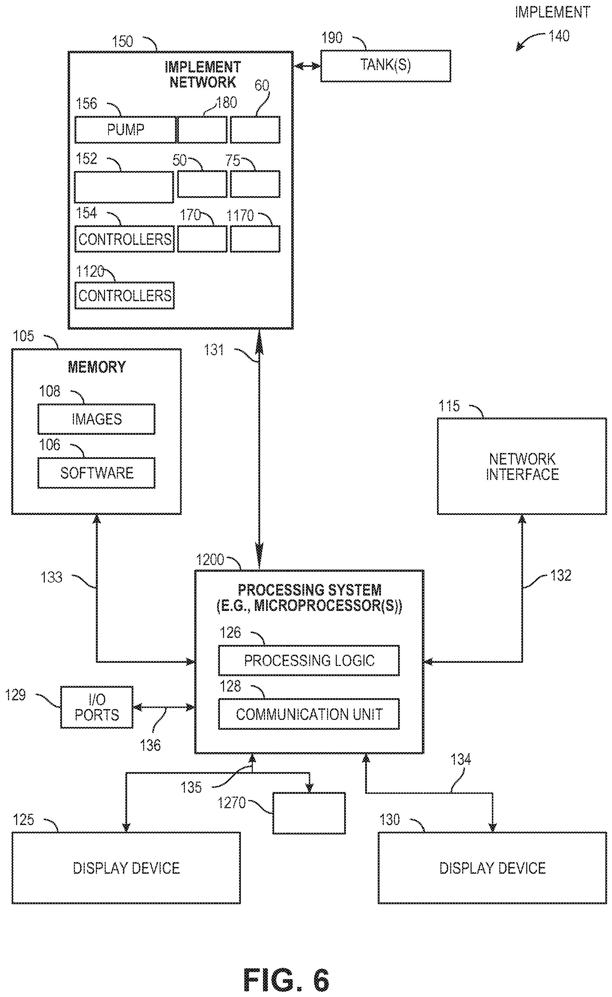

FIG. 6 shows an example of a block diagram of a self-propelled implement 140 (e.g., sprayer, spreader, irrigation implement, etc.) in accordance with one embodiment. The implement 140 includes a processing system 1200, memory 105, and a network interface 115 for communicating with other systems or devices. The network interface 115 can include at least one of a GPS transceiver, a WLAN transceiver (e.g., WiFi), an infrared transceiver, a Bluetooth transceiver, Ethernet, or other interfaces from communications with other devices and systems. The network interface 115 may be integrated with the implement network 150 or separate from the implement network 150 as illustrated in FIG. 6. The I/O ports 129 (e.g., diagnostic/on board diagnostic (OBD) port) enable communication with another data processing system or device (e.g., display devices, sensors, etc.).

In one example, the self-propelled implement 140 performs operations for planting applications of a field. Data associated with the planting applications can be displayed on at least one of the display devices 125 and 130.

The processing system 1200 may include one or more microprocessors, processors, a system on a chip (integrated circuit), or one or more microcontrollers. The processing system includes processing logic 126 for executing software instructions of one or more programs and a communication unit 128 (e.g., transmitter, transceiver) for transmitting and receiving communications from the network interface 115 or implement network 150. The communication unit 128 may be integrated with the processing system or separate from the processing system.

Processing logic 126 including one or more processors may process the communications received from the communication unit 128 including agricultural data (e.g., planting data, GPS data, fluid application data, flow rates, etc.). The system 1200 includes memory 105 for storing data and programs for execution (software 106) by the processing system. The memory 105 can store, for example, software components such as application software for analysis of field applications for performing operations of the present disclosure, or any other software application or module, reflectance signals from sensor arrays, images 108 (e.g., images of seed in a seed passageway, captured images of crops, images of a spray pattern for rows of crops, images for camera calibrations), alerts, maps, etc. The memory 105 can be any known form of a machine readable non-transitory storage medium, such as semiconductor memory (e.g., flash; SRAM; DRAM; etc.) or non-volatile memory, such as hard disks or solid-state drive. The system can also include an audio input/output subsystem (not shown) which may include a microphone and a speaker for, for example, receiving and sending voice commands or for user authentication or authorization (e.g., biometrics).

The processing system 1200 communicates bi-directionally with memory 105, implement network 150, network interface 115, display device 130, display device 125, and I/O ports 129 via communication links 131-136, respectively.

Display devices 125 and 130 can provide visual user interfaces for a user or operator. The display devices may include display controllers. In one embodiment, the display device 125 is a portable tablet device or computing device with a touchscreen that displays data (e.g., planting application data with seed orientation, liquid or fluid application data, captured images, localized view map layer, high definition field maps of as-applied liquid or fluid application data, as-planted or as-harvested data or other agricultural variables or parameters, yield maps, alerts, etc.) and data generated by an agricultural data analysis software application and receives input from the user or operator for an exploded view of a region of a field, monitoring and controlling field operations. The operations may include configuration of the machine or implement, reporting of data, control of the machine or implement including sensors and controllers, and storage of the data generated. The display device 130 may be a display (e.g., display provided by an original equipment manufacturer (OEM)) that displays images and data for a localized view map layer, as-applied liquid or fluid application data, as-planted or as-harvested data, yield data, controlling an implement (e.g., planter, tractor, combine, sprayer, etc.), steering the implement, and monitoring the implement (e.g., planter, combine, sprayer, etc.). A cab control module 1270 may include an additional control module for enabling or disabling certain components or devices of the implement.

The implement 140 (e.g., planter, cultivator, plough, sprayer, spreader, irrigation, implement, etc.) includes an implement network 150 having multiple networks. The implement network 150 having multiple networks (e.g., Ethernet network, Power over Ethernet (PoE) network, a controller area network (CAN) serial bus protocol network, an ISOBUS network, etc.) may include a pump 156 for pumping liquid or fluid from a storage tank(s) 190 to row units of the implement, communication module 180 for receiving communications from controllers and sensors and transmitting these communications. In one example, the implement network 150 includes nozzles 50, lights 60, and vision system 75 having cameras and processors for various embodiments of this present disclosure.

Sensors 152 (e.g., speed sensors, seed sensors (e.g., a single sensor disposed at one or more orientations, a first sensor at a first orientation, first location of a seed passageway and a second sensor at a second orientation, second location of the seed passageway, a sensor array at a first orientation, a sensor array at a second orientation, or a combination of a first sensor array at a first orientation and second sensor array or sensor at a second orientation, light-emitting diodes (LEDs), laser diodes) having light arrays for detecting passage of seed, downforce sensors, actuator valves, OEM sensors, flow sensors, etc.), controllers 154 (e.g., drive system, GPS receiver), and the processing system 120 control and monitoring operations of the implement. The OEM sensors may be moisture sensors or flow sensors, speed sensors for the implement, fluid application sensors for a sprayer, or vacuum, lift, lower sensors for an implement. For example, the controllers may include processors in communication with a plurality of sensors. The processors are configured to process data (e.g., fluid application data) and transmit processed data to the processing system 120. The controllers and sensors may be used for monitoring motors and drives on the implement.

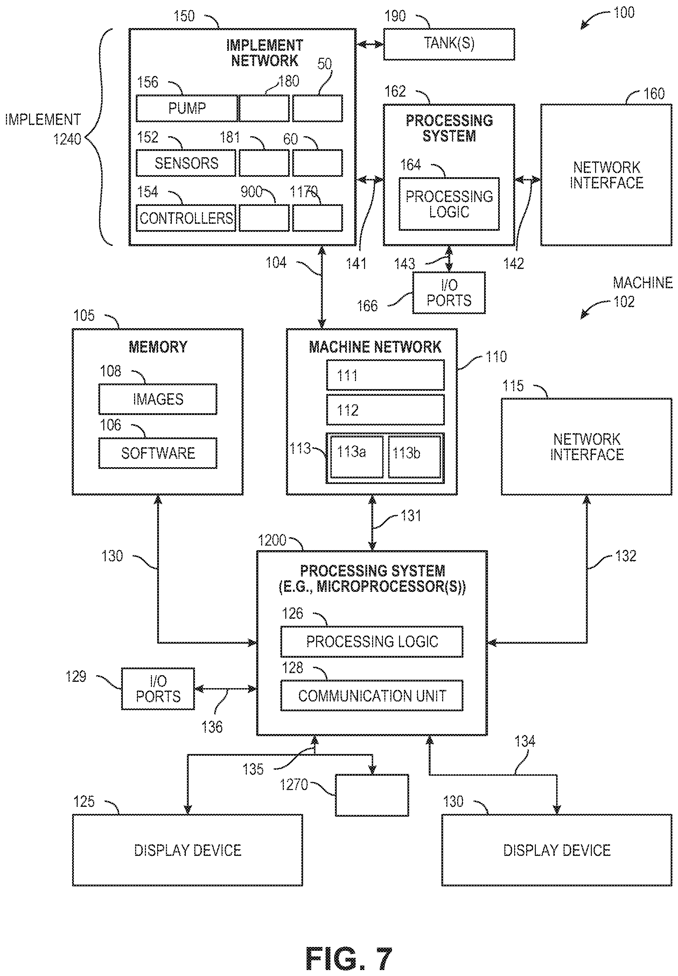

FIG. 7 shows an example of a block diagram of a system 100 that includes a machine 102 (e.g., tractor, combine harvester, etc.) and an implement 1240 (e.g., planter, cultivator, plough, sprayer, spreader, irrigation implement, etc.) in accordance with one embodiment. The machine 102 includes a processing system 1200, memory 105, machine network 110 that includes multiple networks (e.g., an Ethernet network, a network with a switched power line coupled with a communications channel (e.g., Power over Ethernet (PoE) network), a controller area network (CAN) serial bus protocol network, an ISOBUS network, etc.), and a network interface 115 for communicating with other systems or devices including the implement 1240. The machine network 110 includes sensors 112 (e.g., speed sensors), controllers 111 (e.g., GPS receiver, radar unit) for controlling and monitoring operations of the machine or implement. The network interface 115 can include at least one of a GPS transceiver, a WLAN transceiver (e.g., WiFi), an infrared transceiver, a Bluetooth transceiver, Ethernet, or other interfaces from communications with other devices and systems including the implement 1240. The network interface 115 may be integrated with the machine network 110 or separate from the machine network 110 as illustrated in Figure 7. The I/O ports 129 (e.g., diagnostic/on board diagnostic (OBD) port) enable communication with another data processing system or device (e.g., display devices, sensors, etc.).

In one example, the machine is a self-propelled machine that performs operations of a tractor that is coupled to and tows an implement for planting or fluid applications of a field. Data associated with the planting or fluid applications can be displayed on at least one of the display devices 125 and 130.

The processing system 1200 may include one or more microprocessors, processors, a system on a chip (integrated circuit), or one or more microcontrollers. The processing system includes processing logic 126 for executing software instructions of one or more programs and a communication unit 128 (e.g., transmitter, transceiver) for transmitting and receiving communications from the machine via machine network 110 or network interface 115 or implement via implement network 150 or network interface 160. The communication unit 128 may be integrated with the processing system or separate from the processing system. In one embodiment, the communication unit 128 is in data communication with the machine network 110 and implement network 150 via a diagnostic/OBD port of the I/O ports 129 or via network devices 113a and 113b. A communication module 113 includes network devices 113a and 113b. The communication module 113 may be integrated with the communication unit 128 or a separate component.

Processing logic 126 including one or more processors may process the communications received from the communication unit 128 including agricultural data (e.g., planting data with seed orientation data, GPS data, liquid application data, flow rates, weed parameters a crop identification, a camera height from a camera to a ground level, a crop stress indicator, a drought stress indicator, and insect indicator for different target regions, etc.). The system 1200 includes memory 105 for storing data and programs for execution (software 106) by the processing system. The memory 105 can store, for example, software components such as planting application software for analysis of planting applications for performing operations of the present disclosure, or any other software application or module, images 108 (e.g., images of seed in a seed passageway, images for camera calibrations, captured images of crops), alerts, maps, etc. The memory 105 can be any known form of a machine readable non-transitory storage medium, such as semiconductor memory (e.g., flash; SRAM; DRAM; etc.) or non-volatile memory, such as hard disks or solid-state drive. The system can also include an audio input/output subsystem (not shown) which may include a microphone and a speaker for, for example, receiving and sending voice commands or for user authentication or authorization (e.g., biometrics).

The processing system 120 communicates bi-directionally with memory 105, machine network 110, network interface 115, display device 130, display device 125, and I/O ports 129 via communication links 130-136, respectively.

Display devices 125 and 130 can provide visual user interfaces for a user or operator. The display devices may include display controllers. In one embodiment, the display device 125 is a portable tablet device or computing device with a touchscreen that displays data (e.g., seed orientation data, weed parameters, a crop identification, planting application data, liquid or fluid application data, captured images, localized view map layer, high definition field maps of as-applied liquid or fluid application data, as-planted or as-harvested data or other agricultural variables or parameters, yield maps, alerts, etc.) and data generated by an agricultural data analysis software application and receives input from the user or operator for an exploded view of a region of a field, monitoring and controlling field operations. The operations may include configuration of the machine or implement, reporting of data, control of the machine or implement including sensors and controllers, and storage of the data generated. The display device 130 may be a display (e.g., display provided by an original equipment manufacturer (OEM)) that displays images and data for a localized view map layer, as-applied liquid or fluid application data, as-planted or as-harvested data, yield data, weed parameters, controls a machine (e.g., planter, tractor, combine, sprayer, etc.), steering the machine, and monitoring the machine or an implement (e.g., planter, combine, sprayer, etc.) that is connected to the machine with sensors and controllers located on the machine or implement.

A cab control module 1270 may include an additional control module for enabling or disabling certain components or devices of the machine or implement. For example, if the user or operator is not able to control the machine or implement using one or more of the display devices, then the cab control module may include switches to shut down or turn off components or devices of the machine or implement.

The implement 1240 (e.g., planter, cultivator, plough, sprayer, spreader, irrigation, implement, etc.) includes an implement network 150 having multiple networks, a processing system 162 having processing logic 164, a network interface 160, and optional input/output ports 166 for communicating with other systems or devices including the machine 102. The implement network 150 having multiple networks (e.g., Ethernet network, Power over Ethernet (PoE) network, a controller area network (CAN) serial bus protocol network, an ISOBUS network, etc.) may include a pump 156 for pumping liquid or fluid from a storage tank(s) 190 to row units of the implement, communication modules (e.g., 180, 181) for receiving communications from controllers and sensors and transmitting these communications to the machine network. In one example, the communication modules include first and second network devices with network ports. A first network device with a port (e.g., CAN port) of communication module (CM) 180 receives a communication with data from controllers and sensors, this communication is translated or converted from a first protocol into a second protocol for a second network device (e.g., network device with a switched power line coupled with a communications channel, Ethernet), and the second protocol with data is transmitted from a second network port (e.g., Ethernet port) of CM 180 to a second network port of a second network device 113b of the machine network 110. A first network device 113a having first network ports (e.g., 1-4 CAN ports) transmits and receives communications from first network ports of the implement. In one example, the implement network 150 includes nozzles 50, lights 60, vision system 1170 having cameras and processors, and autosteer controller 900 for various embodiments of this present disclosure. The autosteer controller 900 may also be part of the machine network 110 instead of being located on the implement network 150 or in addition to being located on the implement network 150.

Sensors 152 (e.g., speed sensors, seed sensors (e.g., a single sensor disposed at one or more orientations, a first sensor at a first orientation, first location of a seed passageway and a second sensor at a second orientation, second location of the seed passageway, a sensor array at a first orientation, a sensor array at a second orientation, or a combination of a first sensor array at a first orientation and second sensor array or sensor at a second orientation) for detecting passage of seed, downforce sensors, actuator valves, OEM sensors, flow sensors, etc.), controllers 154 (e.g., drive system for seed meter, GPS receiver), and the processing system 162 control and monitoring operations of the implement.

The OEM sensors may be moisture sensors or flow sensors for a combine, speed sensors for the machine, seed force sensors for a planter, liquid application sensors for a sprayer, or vacuum, lift, lower sensors for an implement. For example, the controllers may include processors in communication with a plurality of seed sensors. The processors are configured to process data (e.g., liquid application data, seed sensor data) and transmit processed data to the processing system 162 or 120. The controllers and sensors may be used for monitoring motors and drives on a planter including a variable rate drive system for changing plant populations. The controllers and sensors may also provide swath control to shut off individual rows or sections of the planter. The sensors and controllers may sense changes in an electric motor that controls each row of a planter individually. These sensors and controllers may sense seed delivery speeds in a seed tube for each row of a planter.

The network interface 160 can be a GPS transceiver, a WLAN transceiver (e.g.,WiFi), an infrared transceiver, a Bluetooth transceiver, Ethernet, or other interfaces from communications with other devices and systems including the machine 102. The network interface 160 may be integrated with the implement network 150 or separate from the implement network 150 as illustrated in FIG. 7.

The processing system 162 communicates bi-directionally with the implement network 150, network interface 160, and I/O ports 166 via communication links 141-143, respectively. The implement communicates with the machine via wired and possibly also wireless bidirectional communications 104. The implement network 150 may communicate directly with the machine network 110 or via the network interfaces 115 and 160. The implement may also by physically coupled to the machine for agricultural operations (e.g., planting, harvesting, spraying, etc.). The memory 105 may be a machine-accessible non-transitory medium on which is stored one or more sets of instructions (e.g., software 106) embodying any one or more of the methodologies or functions described herein. The software 106 may also reside, completely or at least partially, within the memory 105 and/or within the processing system 1200 during execution thereof by the system 100, the memory and the processing system also constituting machine-accessible storage media. The software 1206 may further be transmitted or received over a network via the network interface 115.

In one example, the implement 140, 1240 is an autosteered implement comprising a self-propelled implement with an autosteer controller 1120 for controlling traveling of the self-propelled implement. The controllers 154 include a global positioning system to provide GPS coordinates. The vision guidance system 1170 includes at least one camera and a processor. The global positioning system is in communication with the processor, and the processor is in communication with the autosteer controller. The processor is configured to modify the GPS coordinates to a modified GPS coordinates to maintain a desired travel for the self-propelled implement.

In another example, the machine 102 is an autosteered machine comprising a self-propelled machine with an autosteer controller 1120 for controlling traveling of the self-propelled machine and any implement that is coupled to the machine. The controllers 154 include a global positioning system to provide GPS coordinates. The vision guidance system 1170 includes at least one camera and a processor. The global positioning system is in communication with the processor, and the processor is in communication with the autosteer controller. The processor is configured to modify the GPS coordinates to a modified GPS coordinates to maintain a desired travel for the self-propelled machine.

In another example, a boom actuation system 170 moves a boom arm 22 of the implement between a storage position and a deployed position, and the arm is actuated with the boom actuation system.

In one embodiment, a machine-accessible non-transitory medium (e.g., memory 105) contains executable computer program instructions which when executed by a data processing system cause the system to perform operations or methods of the present disclosure.

It will be appreciated that additional components, not shown, may also be part of the system in certain embodiments, and in certain embodiments fewer components than shown in FIG. 6 and FIG. 7 may also be used in a data processing system. It will be appreciated that one or more buses, not shown, may be used to interconnect the various components as is well known in the art.

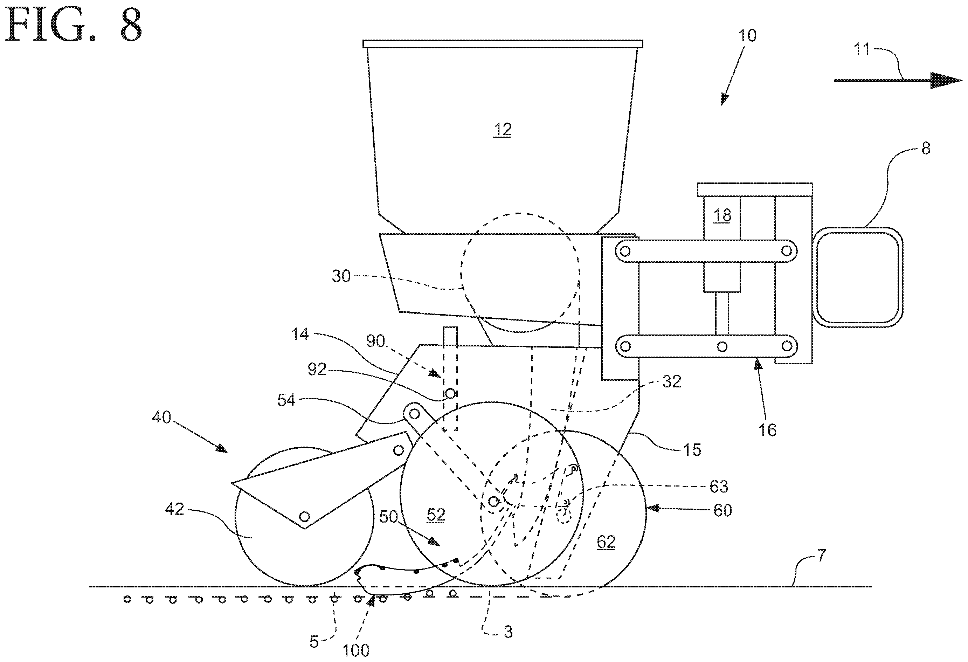

FIG. 8 is a side elevation view of a row unit 10 of an agricultural planter with a seed firmer 1300 mounted to the row unit 10. It should be understood that the planter comprises a plurality of row units 10 mounted along the toolbar 8 in spaced relation. The row units 10 are mounted to the toolbar 8 by a parallel arm linkage 16 permitting the individual row units 10 to independently translate vertically with respect to the toolbar 8. The row unit 10 is shown as incorporating an actuator 18 mounted to the toolbar 8 and the parallel arm linkage 16 to apply supplemental downpressure to the row unit 10.

The row unit 10 includes a frame 14 having a downwardly extending shank 15. The
frame 14 supports an opening disc assembly 60, a gauge wheel assembly 50 and a closing assembly 40. The opening assembly 60 includes two opening discs 62 rotatable about a shaft 63 supported by the shank 15. The opening discs 62 are disposed to cut a v-shaped trench 3 in the soil surface 7 as the row unit is drawn through the field in the direction of arrow 11. The gauge wheel assembly 50 includes two gauge wheels 52 pivotally mounted to the frame 14 by gauge wheel arms 54. A depth adjustment assembly 90 adjustably positions the gauge wheels 52 with respect to the opening discs 62 by contacting the gauge wheel arms 54 to limit the upward travel of the gauge wheel arms 54, thus limiting the depth of the trench 3 opened by the opening discs 62. The closing assembly 40 may include closing wheels 42 disposed to move soil back into the trench 3 to cover the seeds previously deposited as discussed below.

Continuing to refer to FIG. 8, seeds 5 are communicated from a hopper 12 to a seed
meter 30 which dispenses seeds into the seed tube 32 extending downwardly and rearwardly toward the seed trench 3 between the opening discs 62 and the gauge wheels 52. In operation, as the planter is drawn through the field in the direction of arrow 11, the seeds 5 dispensed by the meter 30 are directed downwardly and rearwardly by the seed tube 32 where they are deposited in the seed trench 3 formed by the opening discs 62. A seed firmer 1300 presses the deposited seeds 5 into the soil at the bottom of the seed trench 3 before the seeds are covered with soil by the closing assembly 40 having a closing force.

Any of the following examples can be combined into a single embodiment or these examples can be separate embodiments. The following are non-limiting examples.

There is provided a computer implemented method for selecting a region of interest in a field view of a user interface of a software application comprising receiving a user input to select a region explorer function from a mapping option of the user interface, generating a pop up window or a side by side window for a region explorer view based on the user input, receiving, with the field view, a multipoint user input for selecting the region of interest in the field view, and automatically generating and displaying on a display device data metrics for a first parameter in the region of interest in the pop up window or the side by side window of the region explorer view based on the multipoint user input, wherein the data metrics comprise one or more of a minimum data value in the selected region, a maximum data value in the selected region, a histogram for the data values in the selected region, and a number of acres selected in the region of interest.
The computer implemented method may further comprise receiving a user input to select the first parameter from a parameter region of the GUI.

The data metrics may comprise a histogram of the data values that are grouped into data ranges in the selected region.

The region of interest of the field view may be a polygon formed with the multipoint user input to select vertices of the polygon.

The computer implemented method may further comprise receiving a user input for selecting a different second parameter and automatically generating data values for the second parameter in the field view of the user interface and generating data metrics for the second parameter in the region of interest based on the user input for the second parameter.

The computer implemented method may further comprise displaying the field view with the data values for the second parameter and the selected explorer region and displaying data metrics for the second parameter in the region of interest in a pop up window or a side by side window.

The parameter may comprise a plant summary including coverage, elevation, or vehicle speed, a closing force parameter or a down force parameter including an applied force, an average force, a force margin, a minimum force, or a force state.

The parameter may comprise an insecticide or weed & feed parameter, a nitrogen, a starter, a fungicide parameter, or a seeding parameter including a crop hybrid, a population, a population state, a seeding tank, a singulation, a SRI, or a meter vacuum.

The computer implemented method may further comprise receiving selection of a comparison between selected regions of field views for two parameters, and generating, in response to the selection, comparison data and a user interface with an X versus Y display view for displaying X versus Y data values for the selected two parameters.

There is also provided a system comprising a display device for displaying a user interface having a system parameter region, a mapping option, a field view with data values for a first parameter for an agricultural field, and a region explorer view with data metrics for the first parameter, and at least one processor coupled to the display device. The at least one processor is configured to execution instructions to receive a user input to select a region explorer function from a mapping option of the user interface, generate a pop up window or a side by side window for the region explorer view based on the user input, receive a multipoint user input for selecting a region of interest of the field view, and automatically generating data metrics for the first parameter in the region of interest based on the multipoint user input.

The display device is configured to display the region explorer view with the data metrics for the first parameter based on the multipoint user input.

The data metrics comprise one or more of a minimum data value in the selected region, a maximum data value in the selected region, and a histogram for the data values in the selected region.

The data metrics may comprise a histogram for the data values in the selected region.

The region of interest of the field view may be a polygon formed with the multipoint user input to select the vertices of the polygon.

The at least one processor may be configured to execute instructions to receive a user input for selecting a different second parameter and automatically generating data values for the second parameter in the field view of the user interface and generating data metrics for the second parameter based on the user input for the second parameter.

The at least one processor may be configured to execute instructions to display the field view with the data values for the second parameter and the selected explorer region and display data metrics for the second parameter in the region of interest in a pop up window or a side by side window.

The parameter may comprise a plant summary including coverage, elevation, or vehicle speed, a closing force parameter or a down force parameter including an applied force, an average force, a force margin, a minimum force, or a force state.

The parameter may comprise an insecticide or weed & feed parameter, a nitrogen, a starter, a fungicide parameter, or a seeding parameter including a crop hybrid, a population, a population state, a seeding tank, a singulation, a SRI, or a meter vacuum.

The data metrics may comprise a minimum value, a maximum value, and an average value for seed population in the region of interest.

The data metrics may comprise a minimum value, a maximum value, and an average value for seed population in the region of interest.

The display device may be configured to receive a user input for selection of a comparison between selected regions of field views for two parameters, to generate, in response to the selection, comparison data, and to generate a user interface with an X versus Y display view for displaying X versus Y data values for the selected two parameters in response to receiving the comparison data.

It is to be understood that the above description is intended to be illustrative, and not restrictive. Many other embodiments will be apparent to those of skill in the art upon reading and understanding the above description.

## Claims

1. A computer implemented method (200) for selecting a region of interest in a field view of a graphical user interface (301) of a software application comprising:
receiving a user input to select a region explorer function to select a region of interest of the field view from a mapping option of the graphical user interface(301);
generating a pop up window or a side by side window for a region explorer view based on the user input (204) with the region explorer view including instructions to select a region of interest of the field view having data values for a first parameter;
receiving, with the field view, a multipoint user input for selecting the region of interest in the field view (206) having data values for the first parameter;
receiving a user input to select the first parameter from a parameter region of the graphical user interface (301); and
automatically generating and displaying in the region explorer view data metrics for the first parameter in the region of interest based on the multipoint user input (206), wherein the data metrics comprise one or more of a minimum data value in the selected region, a maximum data value in the selected region, and a histogram for the data values in the selected region.

2. The computer implemented method of claim 1, wherein the histogram for the data values for the first parameter is grouped into data ranges in the selected region.

3. The computer implemented method of claim 1, wherein the region of interest of the field view is a polygon formed with the multipoint user input to select vertices of the polygon.

4. The computer implemented method of claim 1, further comprising:
receiving a user input for selecting a different second parameter;
automatically generating data values for the second parameter in the field view of the user interface and generating data metrics for the second parameter in the region of interest based on the user input for the second parameter;
displaying the field view with the data values for the second parameter and the selected explorer region; and
displaying data metrics for the second parameter in the region of interest in a pop up window or a side by side window.

5. The computer implemented method of any preceding claim, wherein the first parameter comprises a plant summary including coverage, elevation, or vehicle speed, a closing force parameter or a down force parameter including an applied force, an average force, a force margin, a minimum force, or a force state.

6. The computer implemented method of any preceding claim, wherein the first parameter comprises an insecticide or weed & feed parameter, a nitrogen, a starter, a fungicide parameter, or a seeding parameter including a crop hybrid, a population, a population state, a seeding tank, a singulation, a SRI, or a meter vacuum.

7. The computer implemented method of claim 1, further comprising:
receiving selection of a comparison between selected regions of field views for two parameters; and
generating, in response to the selection, comparison data and a user interface with an X versus Y display view for displaying X versus Y data values for the selected two parameters.

8. A system (100, 140) comprising:
a display device (125, 130) for displaying a graphical user interface (301) having a system parameter region (310, 410, 510), a mapping option (380, 480, 580), a field view (360, 460, 560) with data values for a first parameter for an agricultural field, and a region explorer view (370, 470, 570) with data metrics for the first parameter;
wherein the display device is configured to display the region explorer view with the data metrics for the first parameter based on the multipoint user input; wherein the system (100, 140) further comprises
at least one processor (1200) coupled to the display device, the at least one processor (1200) is configured to execute instructions to:
receive a user input to select a region explorer function to select a region of interest of the field of view from a mapping option of the graphical user interface,
generate a pop up window or a side by side window for the region explorer view based on the user input with the region explorer view including instructions to select a region of interest of the field view having data values for a first parameter,
receive a multipoint user input for selecting a region of interest of the field view having data values for the first parameter,
receive a user input for selecting the first parameter from a parameter region of the graphical user interface (301) and
automatically generate data metrics for the first parameter in the region of interest based on the multipoint user input, wherein the data metrics comprise one or more of a minimum data value in the selected region, a maximum data value in the selected region, and a histogram for the data values in the selected region.

9. The system of claim 8, wherein the data metrics comprise a histogram for the data values in the selected region, wherein the region of interest of the field view is a polygon formed with the multipoint user input to select vertices of the polygon.

10. The system of claim 8, wherein the at least one processor (1200) is configured to execute instructions to receive a user input for selecting a different second parameter and automatically generating data values for the second parameter in the field view of the user interface and generating data metrics for the second parameter based on the user input for the second parameter.

11. The system of claim 10, wherein the at least one processor (1200) is configured to execute instructions to display the field view with the data values for the second parameter and the selected explorer region and display data metrics for the second parameter in the region of interest in a pop up window or a side by side window.

12. The system of claim 8, wherein the first parameter comprises a plant summary including coverage, elevation, or vehicle speed, a closing force parameter or a down force parameter including an applied force, an average force, a force margin, a minimum force, or a force state.

13. The system of claim 8, wherein the first parameter comprises an insecticide or weed & feed parameter, a nitrogen, a starter, a fungicide parameter, or a seeding parameter including a crop hybrid, a population, a population state, a seeding tank, a singulation, a SRI, or a meter vacuum.

14. The system of claim 8, wherein the data metrics comprise a minimum value, a maximum value, and an average value for seed population in the region of interest.

15. The system of claim 8, wherein the display device is configured to receive a user input for selection of a comparison between selected regions of field views for two parameters, to generate, in response to the selection, comparison data, and to generate a user interface with an X versus Y display view for displaying X versus Y data values for the two parameters in response to receiving the comparison data.

## Patentansprüche

1. Computerimplementiertes Verfahren (200) zum Auswählen eines interessierenden Bereichs in einer Feldansicht einer grafischen Benutzeroberfläche (301) einer Softwareanwendung, umfassend:
Empfangen einer Benutzereingabe zum Auswählen einer Bereichsexplorerfunktion zum Auswählen eines interessierenden Bereichs der Feldansicht aus einer Abbildungsoption der grafischen Benutzeroberfläche (301);
Erzeugen eines Pop-up-Fensters oder eines nebeneinander angeordneten Fensters für eine Bereichsexploreransicht basierend auf der Benutzereingabe (204), wobei die Bereichsexploreransicht Anweisungen zum Auswählen eines interessierenden Bereichs der Feldansicht mit Datenwerten für einen ersten Parameter beinhaltet;
Empfangen, mit der Feldansicht, einer Mehrpunkt-Benutzereingabe zum Auswählen des interessierenden Bereichs in der Feldansicht (206) mit Datenwerten für den ersten Parameter;
Empfangen einer Benutzereingabe zum Auswählen des ersten Parameters aus einem Parameterbereich der grafischen Benutzeroberfläche (301); und
automatisches Erzeugen und Anzeigen, in der Bereichsexploreransicht, von Datenmetriken für den ersten Parameter in dem interessierenden Bereich basierend auf der Mehrpunkt-Benutzereingabe (206), wobei die Datenmetriken eines oder mehrere von einem minimalen Datenwert in dem ausgewählten Bereich und einem maximalen Datenwert in dem ausgewählten Bereich sowie ein Histogramm für die Datenwerte in dem ausgewählten Bereich umfassen.

2. Computerimplementiertes Verfahren nach Anspruch 1, wobei das Histogramm für die Datenwerte für den ersten Parameter in Datenbereiche in dem ausgewählten Bereich gruppiert ist.

3. Computerimplementiertes Verfahren nach Anspruch 1, wobei der interessierende Bereich der Feldansicht ein Polygon ist, das mittels Mehrpunkt-Benutzereingabe gebildet wurde, um Eckpunkte des Polygons auszuwählen.

4. Computerimplementiertes Verfahren nach Anspruch 1, ferner umfassend:
Empfangen einer Benutzereingabe zum Auswählen eines anderen, zweiten Parameters;
automatisches Erzeugen von Datenwerten für den zweiten Parameter in der Feldansicht der Benutzeroberfläche und Erzeugen von Datenmetriken für den zweiten Parameter in dem interessierenden Bereich basierend auf der Benutzereingabe für den zweiten Parameter;
Anzeigen der Feldansicht mit den Datenwerten für den zweiten Parameter und den ausgewählten Explorerbereich; und
Anzeigen von Datenmetriken für den zweiten Parameter in dem interessierenden Bereich in einem Pop-up-Fenster oder einem nebeneinander angeordneten Fenster.

5. Computerimplementiertes Verfahren nach einem der vorhergehenden Ansprüche, wobei der erste Parameter eine Pflanzenzusammenfassung einschließlich Abdeckung, Höhe oder Fahrzeuggeschwindigkeit, einen Schließkraftparameter oder einen Abwärtskraftparameter einschließlich einer aufgebrachten Kraft, einer durchschnittlichen Kraft, einer Kraftmarge, einer minimalen Kraft oder eines Kraftzustands umfasst.

6. Computerimplementiertes Verfahren nach einem der vorhergehenden Ansprüche, wobei der erste Parameter einen Insektizid- oder Unkrautvernichter- & Düngemittelparameter, einen Stickstoff, einen Starter, einen Fungizidparameter oder einen Aussaatparameter, der ein Ernteguthybrid, eine Population, einen Populationszustand, einen Saatgutbehälter, eine Vereinzelung, einen SRI oder ein Dosiergerät-Vakuum beinhaltet, umfasst.

7. Computerimplementiertes Verfahren nach Anspruch 1, ferner umfassend:
Empfangen einer Auswahl eines Vergleichs zwischen ausgewählten Bereichen von Feldansichten für zwei Parameter; und
Erzeugen, als Reaktion auf die Auswahl, von Vergleichsdaten und einer Benutzeroberfläche mit einer X-Y-Gegenüberstellungsansicht zum Anzeigen von Datenwerten für X im Vergleich zu Y für die ausgewählten zwei Parameter.

8. System (100, 140), umfassend:
eine Anzeigevorrichtung (125, 130) zum Anzeigen einer grafischen Benutzeroberfläche (301) mit einem Systemparameterbereich (310, 410, 510), einer Abbildungsoption (380, 480, 580), einer Feldansicht (360, 460, 560) mit Datenwerten für einen ersten Parameter für ein landwirtschaftliches Feld und einer Bereichsexploreransicht (370, 470, 570) mit Datenmetriken für den ersten Parameter;
wobei die Anzeigevorrichtung dazu ausgelegt ist, die Bereichsexploreransicht mit den Datenmetriken für den ersten Parameter basierend auf der Mehrpunkt-Benutzereingabe anzuzeigen; wobei das System (100, 140) ferner umfasst
mindestens einen Prozessor (1200), der mit der Anzeigevorrichtung gekoppelt ist, wobei der mindestens eine Prozessor (1200) dazu ausgelegt ist, Anweisungen auszuführen zum:
Empfangen einer Benutzereingabe zum Auswählen einer Bereichsexplorerfunktion zum Auswählen eines interessierenden Bereichs des Sichtfeldes aus einer Abbildungsoption der grafischen Benutzeroberfläche,
Erzeugen eines Pop-up-Fensters oder eines nebeneinander angeordneten Fensters für die Bereichsexploreransicht basierend auf der Benutzereingabe, wobei die Bereichsexploreransicht Anweisungen zum Auswählen eines interessierenden Bereichs der Feldansicht mit Datenwerten für einen ersten Parameter beinhaltet,
Empfangen einer Mehrpunkt-Benutzereingabe zum Auswählen eines interessierenden Bereichs der Feldansicht mit Datenwerten für den ersten Parameter,
Empfangen einer Benutzereingabe zum Auswählen des ersten Parameters aus einem Parameterbereich der grafischen Benutzeroberfläche (301), und
automatisches Erzeugen von Datenmetriken für den ersten Parameter in dem interessierenden Bereich basierend auf der Mehrpunkt-Benutzereingabe, wobei die Datenmetriken eines oder mehrere von einem minimalen Datenwert in dem ausgewählten Bereich und einem maximalen Datenwert in dem ausgewählten Bereich sowie ein Histogramm für die Datenwerte in dem ausgewählten Bereich umfassen.

9. System nach Anspruch 8, wobei die Datenmetriken ein Histogramm für die Datenwerte in dem ausgewählten Bereich umfassen, wobei der interessierende Bereich der Feldansicht ein Polygon ist, das mittels der Mehrpunkt-Benutzereingabe gebildet wurde, um Eckpunkte des Polygons auszuwählen.

10. System nach Anspruch 8, wobei der mindestens eine Prozessor (1200) dazu ausgelegt ist, Anweisungen auszuführen, um eine Benutzereingabe zum Auswählen eines anderen, zweiten Parameters und zum automatischen Erzeugen von Datenwerten für den zweiten Parameter in der Feldansicht der Benutzeroberfläche und zum Erzeugen von Datenmetriken für den zweiten Parameter basierend auf der Benutzereingabe für den zweiten Parameter zu empfangen.

11. System nach Anspruch 10, wobei der mindestens eine Prozessor (1200) dazu ausgelegt ist, Anweisungen auszuführen, um die Feldansicht mit den Datenwerten für den zweiten Parameter und den ausgewählten Explorerbereich anzuzeigen und Datenmetriken für den zweiten Parameter in dem interessierenden Bereich in einem Pop-up-Fenster oder einem nebeneinander angeordneten Fenster anzuzeigen.

12. System nach Anspruch 8, wobei der erste Parameter eine Pflanzenzusammenfassung einschließlich Abdeckung, Höhe oder Fahrzeuggeschwindigkeit, einen Schließkraftparameter oder einen Abwärtskraftparameter einschließlich einer aufgebrachten Kraft, einer durchschnittlichen Kraft, einer Kraftmarge, einer minimalen Kraft oder eines Kraftzustands umfasst.

13. System nach Anspruch 8, wobei der erste Parameter einen Insektizid- oder Unkrautvernichter- & Düngemittelparameter, einen Stickstoff, einen Starter, einen Fungizidparameter oder einen Aussaatparameter, der ein Ernteguthybrid, eine Population, einen Populationszustand, einen Saatgutbehälter, eine Vereinzelung, einen SRI oder ein Dosiergerät-Vakuum beinhaltet, umfasst.

14. System nach Anspruch 8, wobei die Datenmetriken einen Minimalwert, einen Maximalwert und einen Mittelwert für die Saatgutpopulation in dem interessierenden Bereich umfassen.

15. System nach Anspruch 8, wobei die Anzeigevorrichtung dazu ausgelegt ist, eine Benutzereingabe zur Auswahl eines Vergleichs zwischen ausgewählten Regionen von Feldansichten für zwei Parameter zu empfangen, als Reaktion auf die Auswahl Vergleichsdaten zu erzeugen und eine Benutzeroberfläche mit einer X-Y-Gegenüberstellungsansicht zum Anzeigen von Datenwerten für X im Vergleich zu Y für die zwei Parameter als Reaktion auf das Empfangen der Vergleichsdaten zu erzeugen.

## Revendications

1. Procédé mis en œuvre par ordinateur (200) pour sélectionner une région d'intérêt dans un champ de visualisation d'une interface utilisateur graphique (301) d'une application logicielle, le procédé comprenant les étapes suivantes :
recevoir une entrée utilisateur pour sélectionner une fonction d'exploration de région afin de sélectionner une région d'intérêt du champ de visualisation à partir d'une option de cartographie de l'interface utilisateur graphique (301) ;
générer une fenêtre contextuelle ou une fenêtre affichée côte à côte pour une vue d'exploration de région sur la base de l'entrée utilisateur (204), la vue d'exploration de région comprenant des instructions pour sélectionner une région d'intérêt du champ de visualisation ayant des valeurs de données correspondant à un premier paramètre ;
recevoir, avec le champ de visualisation, une entrée utilisateur multipoint pour sélectionner la région d'intérêt dans le champ de visualisation (206) ayant des valeurs de données pour le premier paramètre ;
recevoir une entrée utilisateur pour sélectionner le premier paramètre à partir d'une région de paramètres de l'interface utilisateur graphique (301) ; et
générer et afficher automatiquement, dans la vue de l'explorateur de région, des mesures de données pour le premier paramètre dans la région d'intérêt sur la base de l'entrée utilisateur multipoint (206), les mesures de données comprenant une ou plusieurs valeurs parmi une valeur de données minimale dans la région sélectionnée, une valeur de données maximale dans la région sélectionnée et un histogramme pour les valeurs de données dans la région sélectionnée.

2. Procédé mis en œuvre par ordinateur selon la revendication 1, dans lequel l'histogramme pour les valeurs de données pour le premier paramètre est groupé en plages de données dans la région sélectionnée.

3. Procédé mis en œuvre par ordinateur selon la revendication 1, dans lequel la région d'intérêt du champ de visualisation est un polygone formé avec l'entrée utilisateur multipoint pour sélectionner les sommets du polygone.

4. Procédé mis en œuvre par ordinateur selon la revendication 1, comprenant en outre les étapes suivantes :
recevoir une entrée utilisateur pour la sélection d'un deuxième paramètre différent ;
générer automatiquement des valeurs de données pour le deuxième paramètre dans le champ de visualisation de l'interface utilisateur et générer des mesures de données pour le deuxième paramètre dans la région d'intérêt sur la base de l'entrée utilisateur pour le deuxième paramètre ;
afficher le champ de visualisation avec les valeurs de données pour le deuxième paramètre et la région d'exploration sélectionnée ; et
afficher des mesures de données pour le deuxième paramètre dans la région d'intérêt dans une fenêtre contextuelle ou une fenêtre affichée côte à côte.

5. Procédé mis en œuvre par ordinateur selon l'une quelconque des revendications précédentes, dans lequel le premier paramètre comprend un résumé d'installation comprenant la couverture, l'élévation ou la vitesse du véhicule, un paramètre de force de fermeture ou un paramètre de force verticale comprenant une force appliquée, une force moyenne, une marge de force, une force minimale ou un état de force.

6. Procédé mis en œuvre par ordinateur selon l'une quelconque des revendications précédentes, dans lequel le premier paramètre comprend un paramètre d'insecticide ou de désherbant avec engrais, un paramètre d'azote, un paramètre d'engrais de démarrage (« starter »), un paramètre de fongicide ou un paramètre de semis comprenant un hybride de culture, une densité de semis, un état de la densité de semis, une trémie de semences, un indice de singularisation, un indice SRI ou un niveau de vide du doseur de semences.

7. Procédé mis en œuvre par ordinateur selon la revendication 1, comprenant en outre les étapes suivantes :
recevoir la sélection d'une comparaison entre les régions sélectionnées des champs de visualisation pour deux paramètres ; et
générer, en réponse à la sélection, des données de comparaison et une interface utilisateur avec une vue d'affichage X/Y pour afficher les valeurs de données X/Y pour les deux paramètres sélectionnés.

8. Système (100, 140) comportant :
un dispositif d'affichage (125, 130) pour afficher une interface utilisateur graphique (301) ayant une région de paramètres de système (310, 410, 510), une option de mise en correspondance (380, 480, 580), un champ de visualisation (360, 460, 560) avec des valeurs de données pour un premier paramètre pour un champ agricole, et une vue d'explorateur de région (370, 470, 570) avec des mesures de données pour le premier paramètre ;
où le dispositif d'affichage est configuré pour afficher la vue de l'explorateur de région avec les mesures de données pour le premier paramètre sur la base de l'entrée utilisateur multipoint ; où le système (100, 140) comprend en outre
au moins un processeur (1200) couplé au dispositif d'affichage, l'au moins un processeur (1200) étant configuré pour exécuter des instructions pour :
recevoir une entrée utilisateur pour sélectionner une fonction d'exploration de région afin de sélectionner une région d'intérêt du champ de visualisation à partir d'une option de cartographie de l'interface utilisateur graphique,
générer une fenêtre contextuelle ou une fenêtre affichée côte à côte pour la vue d'exploration de région sur la base de l'entrée utilisateur, la vue d'exploration de région comprenant des instructions pour sélectionner une région d'intérêt du champ de visualisation ayant des valeurs de données correspondant à un premier paramètre, recevoir une entrée utilisateur multipoint pour sélectionner une région d'intérêt du champ de visualisation ayant des valeurs de données pour le premier paramètre,
recevoir une entrée utilisateur pour sélectionner le premier paramètre à partir d'une région de paramètres de l'interface utilisateur graphique (301), et
Générer automatiquement des mesures de données pour le premier paramètre dans la région d'intérêt sur la base de l'entrée utilisateur multipoint, les mesures de données comprenant une ou plusieurs valeurs parmi une valeur de données minimale dans la région sélectionnée, une valeur de données maximale dans la région sélectionnée et un histogramme pour les valeurs de données dans la région sélectionnée.

9. Système selon la revendication 8, dans lequel les mesures de données comprennent un histogramme pour les valeurs de données dans la région sélectionnée, où la région d'intérêt du champ de visualisation est un polygone formé avec l'entrée utilisateur multipoint pour sélectionner les sommets du polygone.

10. Système selon la revendication 8, dans lequel l'au moins un processeur (1200) est configuré pour exécuter des instructions pour recevoir une entrée utilisateur pour sélectionner un deuxième paramètre différent et générer automatiquement des valeurs de données pour le deuxième paramètre dans le champ de visualisation de l'interface utilisateur et générer des mesures de données pour le deuxième paramètre sur la base de l'entrée utilisateur pour le deuxième paramètre.

11. Système selon la revendication 10, dans lequel l'au moins un processeur (1200) est configuré pour exécuter des instructions pour afficher le champ de visualisation avec les valeurs de données pour le deuxième paramètre et la région d'exploration sélectionnée et afficher des mesures de données pour le deuxième paramètre dans la région d'intérêt dans une fenêtre contextuelle ou une fenêtre affichée côte à côte.

12. Système selon la revendication 8, dans lequel le premier paramètre comprend un résumé d'installation comprenant la couverture, l'élévation ou la vitesse du véhicule, un paramètre de force de fermeture ou un paramètre de force verticale comprenant une force appliquée, une force moyenne, une marge de force, une force minimale ou un état de force.

13. Système selon la revendication 8, dans lequel le premier paramètre comprend un paramètre d'insecticide ou de désherbant avec engrais, un paramètre d'azote, un paramètre d'engrais de démarrage (« starter »), un paramètre de fongicide ou un paramètre de semis comprenant un hybride de culture, une densité de semis, un état de la densité de semis, une trémie de semences, un indice de singularisation, un indice SRI ou un niveau de vide du doseur de semences.

14. Système selon la revendication 8, dans lequel les mesures de données comprennent une valeur minimale, une valeur maximale, et une valeur moyenne pour la population de semences dans la région d'intérêt.

15. Système selon la revendication 8, dans lequel le dispositif d'affichage est configuré pour recevoir une entrée utilisateur pour la sélection d'une comparaison entre des régions sélectionnées de champ de visualisation pour deux paramètres, pour générer, en réponse à la sélection, des données de comparaison, et pour générer une interface utilisateur avec une vue d'affichage X/Y pour afficher les valeurs de données X/Y pour les deux paramètres pour les deux paramètres en réponse à la réception des données de comparaison.
